(19) **Europäisches Patentamt / European Patent Office / Office européen des brevets**

(11) **EP 3 153 599 B1**

(12) **EUROPEAN PATENT SPECIFICATION**

(45) Date of publication and mention
of the grant of the patent:
**20.02.2019 Bulletin 2019/08**

(21) Application number: **15838134.3**

(22) Date of filing: **27.07.2015**

(51) Int Cl.:
*C22C 38/00* (2006.01)　　*B01D 53/90* (2006.01)
*B01D 53/94* (2006.01)　　*C21D 9/46* (2006.01)
*C22C 38/50* (2006.01)　　*F01N 3/08* (2006.01)
*F01N 3/28* (2006.01)

(86) International application number:
**PCT/JP2015/003735**

(87) International publication number:
**WO 2016/035241 (10.03.2016 Gazette 2016/10)**

(54) **FERRITIC STAINLESS STEEL SHEET FOR UREA-SCR CASING**

FERRITISCHES EDELSTAHLBLECH FÜR HARNSTOFF-SCR GEHÄUSE

EUILLE D'ACIER INOXYDABLE FERRITIQUE POUR RÉDUCTION CATALYTIQUE SÉLECTIVE (RCS) BOÎTIER DE L'URÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.09.2014 JP 2014177911**

(43) Date of publication of application:
**12.04.2017 Bulletin 2017/15**

(73) Proprietor: **JFE Steel Corporation
Tokyo, 100-0011 (JP)**

(72) Inventors:
• **HIRASAWA, Junichiro**
**Tokyo 100-0011 (JP)**
• **YANO, Takayoshi**
**Tokyo 100-0011 (JP)**
• **ISHIKAWA, Shin**
**Tokyo 100-0011 (JP)**
• **KAMI, Chikara**
**Tokyo 100-0011 (JP)**

(74) Representative: **Hoffmann Eitle
Patent- und Rechtsanwälte PartmbB
Arabellastraße 30
81925 München (DE)**

(56) References cited:
| | |
|---|---|
| JP-A- H03 264 652 | JP-A- H04 280 948 |
| JP-A- H10 306 350 | JP-A- 2007 302 995 |
| JP-A- 2009 035 813 | JP-A- 2009 242 933 |
| JP-A- 2012 112 025 | JP-A- 2012 112 025 |
| US-A1- 2003 183 626 | US-A1- 2009 056 838 |

• **NOCKERT J ET AL: "Corrosion of stainless steels in simulated diesel exhaust environment with urea", MATERIALS AND CORROSION, WILEY, vol. 63, no. 5, 1 May 2012 (2012-05-01), pages 388-395, XP001575276, ISSN: 0947-5117, DOI: 10.1002/MACO.201005783 [retrieved on 2011-01-12]**

**Description**

Technical Field

The present invention relates to the use of a ferritic stainless steel sheet for the casing of a urea SCR catalyst carrier.

Background Art

Urea SCR (SCR: Selective Catalytic Reduction) is an environmental technology for making NOx harmless by reducing NOx into nitrogen ($N_2$) and water ($H_2O$) in the presence of a catalyst through the use of ammonia ($NH_3$) which is derived by decomposing aqueous urea and is used mainly for diesel powered trucks.

It is known that, in the process of deriving $NH_3$ by decomposing this aqueous urea at a high temperature, a highly corrosive material called ammonium carbamate ($NH_2COONH_4$) is generated.

A conventional urea SCR catalyst carrier is composed mainly of ceramic, and such a ceramic urea SCR catalyst carrier having a circular cylinder form is wrapped with a ferritic stainless steel sheet which is used as a casing for supporting the carrier. Therefore, the inner side (the side facing the ceramic) of such a ferritic stainless steel sheet is required to be resistant to corrosion caused by ammonium carbamate. For example, Patent Literature 1 discloses a technique in which a ferritic stainless steel sheet which contains 10.0 mass% to 20.0 mass% of Cr and which has been subjected to dip pickling in nitric acid is used for the parts of a urea SCR system.

Citation List

Patent Literature

PTL 1: Japanese Unexamined Patent Application Publication No. 2012-112025
PTL 2: US 2009/056838 A1.
PTL 3: NOCKERT J ET AL: "Corrosion of stainless steels in simulated diesel exhaust environment with urea",MATERIALS AND CORROSION, WILEY, vol. 63, no. 5, 1 May 2012 (2012-05-01), pages 388-395, XP001575276,ISSN: 0947-5117, DOI: 10.1002/MACO.201005783

PTL 2 describes a ferritic stainless steel sheet having excellent corrosion resistance and its manufacturing method and the chemical range disclosed in PTL 2 overlaps with the range claimed in the application.

It further discloses a list of potential applications, including containers for marine transportation, vessels, kitchen instruments, interior and exterior building materials, automobile parts, elevators, escalators, railcars, and outer panels of electric apparatus.

PTL 2 however, does not disclose the use for an urea SCR casing. PTL 3 describes the stainless steels commonly used as a casing for an urea SCR catalyst carrier. These are DIN 409, DIN 430, and DIN 304L. These stainless steels contain no Cu, and have lower Cr concentrations: 10.5-11.75%, 16-18% and 17.5-19.5%, respectively.

Summary of Invention

Technical Problem

Here, it is supposed that, since diesel powered trucks equipped with a urea SCR system are used for various purposes ranging from short-distance transportation in a town to long-distance transportation, the amount of corrosive ammonium carbamate generated varies depending on the temperature of the exhaust gas and the amount of the exhaust gas. In addition, it is thought that, in the case where a large amount of ammonium carbamate is generated, the corrosion of a ferritic stainless steel sheet tends to progress.

From this point of view, in the case of the ferritic stainless steel sheet according to Patent Literature 1, there is a problem of severe corrosion occurring in a urea SCR casing due to its insufficient corrosion resistance against ammonium carbamate in some cases. Therefore, there is a demand for a ferritic stainless steel sheet for a urea SCR casing having higher corrosion resistance.

Therefore, an object of the present invention is to provide a ferritic stainless steel sheet for use as a urea SCR casing excellent in terms of corrosion resistance in a urea SCR environment.

Solution to Problem

The present inventors, in order to solve the problem described above, conducted investigations regarding the influences of various alloy elements on corrosion resistance in a urea environment by performing a Huey test, which is used for evaluating a material for a urea manufacturing plant, and, as a result, found that it is possible to obtain a steel sheet excellent in terms of corrosion resistance which can preferably be used for a urea SCR casing by adding 20.5 mass% or more of Cr, 0.40 mass% or more of Cu, and an appropriate amount of Ti or Nb to a steel sheet.
The subject matter of the present invention is as follows.

[1] Use of ferritic stainless steel sheet for a urea SCR casing, the steel sheet having a chemical composition consisting of, by mass%, C: 0.020% or less, Si: 0.01% or more and 0.50% or less, Mn: 0.01% or more and 0.50% or less, P: 0.040% or less, S: 0.010% or less, Al: 0.01% or more and 0.20% or less, Cr: 20.5% or more and 24.0% or less, Cu: 0.40% or more and 0.80% or less, Ni: 0.05% or more and 0.6% or less, N: 0.020% or less, one or both selected from among Ti: 0.01% or more and 0.40% or less and Nb: 0.01% or more and 0.55% or less, optionally Mo: 0.01% or more and 0.25% or less, and optionally one, two, or all of V:0.01% or more and 0.20% or less, Zr: 0.01% or more and 0.20% or less, and Ca: 0.0002% or more and 0.0020% or less, and the balance being Fe and inevitable impurities, in which the relationship Ti + Nb $\times$ 48/93 $\geq$ 8 $\times$ (C + N) $\cdots$ (1)
(in relational expression (1), Ti, Nb, C, and N denote the contents (mass%) of the corresponding chemical elements) is satisfied.

Advantageous Effects of Invention

The ferritic stainless steel sheet used for a urea SCR casing according to the present invention is excellent in terms of corrosion resistance in a urea SCR environment and capable of increasing the durability of a urea SCR casing.

Description of Embodiments

The ferritic stainless steel sheet used for a urea SCR casing according to the present invention has a chemical composition containing, by mass%, C: 0.020% or less, Si: 0.01% or more and 0.50% or less, Mn: 0.01% or more and 0.50% or less, P: 0.040% or less, S: 0.010% or less, Al: 0.01% or more and 0.20% or less, Cr: 20.5% or more and 24.0% or less, Cu: 0.40% or more and 0.80% or less, Ni: 0.05% or more and 0.6% or less, N: 0.020% or less, one or both selected from among Ti: 0.01% or more and 0.40% or less and Nb: 0.01% or more and 0.55% or less, and the balance being Fe and inevitable impurities, in which the relationship Ti + Nb $\times$ 48/93 $\geq$ 8 $\times$ (C + N) (in the relational expression, Ti, Nb, C, and N denote the contents (mass%) of the corresponding chemical elements) is satisfied. The ferritic stainless steel sheet used for a urea SCR casing according to the present invention is excellent in terms of corrosion resistance against ammonium carbamate and capable of increasing the durability of a urea SCR casing.
Hereafter, the reasons for the limitations on the chemical composition of the ferritic stainless steel sheet used for a urea SCR casing according to the present invention (hereinafter, referred to as "the steel sheet used according to the present invention") will be described. Here, "%" related to the constituent chemical elements in the steel sheet used according to the present invention denotes "mass%", unless otherwise noted.

[C: 0.020% or less]

Since C is a chemical element which decreases the workability and toughness of a steel sheet, and since such negative effects become noticeable in the case where the C content is more than 0.020%, the C content is limited to be 0.020% or less. In particular, from the viewpoint of workability and toughness, it is preferable that the C content be 0.017% or less, or more preferably 0.012% or less.

[Si: 0.01% or more and 0.50% or less]

Si is a chemical element which is necessary as a deoxidizing agent. Such an effect is realized in the case where the Si content is 0.01% or more. However, since there is a decrease in pickling capability by forming a SiO$_2$ film on the surface of a steel sheet as a result of being oxidized when cold-rolled-sheet annealing is performed, the upper limit of the Si content is set to be 0.50%. It is preferable that the Si content be 0.20% or less from the viewpoint of pickling capability.

[Mn: 0.01% or more and 0.50% or less]

Mn is a chemical element which is necessary as a deoxidizing agent. Such an effect is realized in the case where the Mn content is 0.01% or more. However, since there is a decrease in the workability of a steel sheet in the case where the Mn content is excessively large, the Mn content is limited to be 0.50% or less. It is preferable that the Mn content be 0.30% or less, or more preferably 0.20% or less, from the viewpoint of the workability of a steel sheet.

[P: 0.040% or less]

Since P is a chemical element which decreases the workability and toughness of a steel sheet, it is preferable that the P content be as small as possible, and the P content is set to be 0.040% or less, or preferably 0.030% or less.

[S: 0.010% or less]

Since S is a chemical element which decreases toughness, it is preferable that the S content be as small as possible, and the S content is set to be 0.010% or less. It is preferable that the S content be 0.006% or less from the viewpoint of toughness.

[Al: 0.01% or more and 0.20% or less]

Al is a chemical element which is effective as a deoxidizing agent. Such an effect is realized in the case where the Al content is 0.01% or more. However, since there is a decrease in surface quality as a result of, for example, scab flaws occurring due to an excessive amount of $Al_2O_3$-based inclusions being formed in the case where the Al content is excessively large, the Al content is limited to be 0.20% or less. It is preferable that the Al content be 0.05% or less from the viewpoint of surface quality.

[Cr: 20.5% or more and 24.0% or less]

Cr is a chemical element which is effective for increasing corrosion resistance against ammonium carbamate in a urea SCR environment, which characterizes the present invention, because it suppresses the occurrence of corrosion by strengthening a passivation film, which is formed on the surface of a stainless steel sheet. Since it is necessary that the Cr content be 20.5% or more in order to achieve sufficient corrosion resistance, the lower limit of the Cr content is set to be 20.5%. It is more preferable that the Cr content be 21.0% or more. On the other hand, since Cr decreases the toughness of a steel sheet, and since there is a significant decrease in toughness, in particular, in the case where the Cr content is more than 24.0%, the Cr content is limited to be 24.0% or less. It is preferable that the Cr content be 22.0% or less from the viewpoint of toughness.
In addition, the present inventors found that, by adding 20.5% or more and 24.0% or less of Cr and, as described below, 0.40% or more and 0.80% or less of Cu simultaneously to a steel sheet, since Cr suppresses the occurrence of corrosion, and since Cu suppresses the progress of corrosion, a steel sheet has significantly excellent corrosion resistance against ammonium carbamate from the synergy of such effects.

[Cu: 0.40% or more and 0.80% or less]

Cu is a chemical element which has a function of suppressing the progress of pitting corrosion (the progress of corrosion) in the case where pitting corrosion occurs due to corrosion and which is accordingly effective, in particular, of increasing corrosion resistance against ammonium carbamate in a urea SCR environment. Such an effect is realized in the case where the Cu content is 0.40% or more. On the other hand, since there is a decrease in toughness in the case where the Cu content is more than 0.80%, the Cu content is set to be 0.80% or less. It is preferable that the Cu content be 0.60% or less from the viewpoint of toughness.

[Ni: 0.05% or more and 0.6% or less]

Ni is effective for increasing corrosion resistance and toughness, and such effects are realized in the case where the Ni content is 0.05% or more. However, since Ni increases material costs, the Ni content is set to be 0.6% or less.

[N: 0.020% or less]

Since N is, like C, a chemical element which decreases workability and toughness, and since such negative effects become noticeable in the case where the N content is more than 0.020%, the N content is limited to be 0.020% or less. In particular, it is preferable that the N content be 0.015% or less, or more preferably 0.012% or less, from the viewpoint of workability and toughness.

[One or both selected from among Ti: 0.20% or more and 0.40% or less and Nb: 0.01% or more and 0.55% or less] and [Ti + Nb × 48/93 ≥ 8 × (C + N)]

Ti and Nb inhibit a sensitization phenomenon, in which the corrosion resistance is decreased due to the combination of Cr with carbon and nitrogen, as a result of forming carbonitrides. Such an effect is realized in the case where the Ti content 0.20% or more or the Nb content is 0.01% or more and where

$$Ti + Nb \times 48/93 \geq 8 \times (C + N) \quad \cdots (1)$$

is satisfied (in relational expression (1), Ti, Nb, C, and N denote the contents (mass%) of the corresponding chemical elements). In addition, from the viewpoint of inhibiting sensitization, it is preferable that the Nb content be 0.30% or more while relational expression (1) is satisfied. However, in the case where the Ti content or the Nb content is excessively large, the effect of inhibiting sensitization becomes saturated, and there is a decrease in toughness. Therefore, the Ti content is set to be 0.40% or less, and the Nb content is set to be 0.55% or less. It is preferable that the Ti content be 0.35% or less and that the Nb content be 0.45% or less from the viewpoint of toughness.
In the case of the steel sheet used according to the present invention, the remainder other than the constituent chemical elements described above is Fe and inevitable impurities.
In addition, in the present invention, Mo, V, Zr, and Ca may be added for the purposes described below and within the ranges described below, although these chemical elements are not essential constituent chemical elements.

[Mo: 0.01% or more and 0.25% or less]

Mo is a chemical element which is effective for increasing corrosion resistance, and such an effect is realized in the case where the Mo content is 0.01% or more. However, since there is a decrease in toughness in the case where the Mo content is more than 0.25%, the Mo content is set to be 0.01% or more and 0.25% or less in the case where Mo is added.

[V: 0.01% or more and 0.20% or less]

V is a chemical element which increases workability in the case where V is added. Such an effect is realized in the case where the V content is 0.01% or more. However, since there may be a decrease in surface quality due to the occurrence of surface defects in the case where the V content is more than 0.20%, the V content is set to be 0.01% or more and 0.20% or less in the case where V is added.

[Zr: 0.01% or more and 0.20% or less]

Zr is a chemical element which increases workability in the case where Zr is added. Such an effect is realized in the case where the Zr content is 0.01% or more. However, since there may be a decrease in surface quality due to the occurrence of surface defects in the case where the Zr content is more than 0.20%, the Zr content is set to be 0.01% or more and 0.20% or less in the case where Zr is added.

[Ca: 0.0002% or more and 0.0020% or less]

Since Ca has a deoxidizing effect, Ca is added as needed. In order to realize such an effect, the Ca content is set to be 0.0002% or more, or preferably 0.0005% or more. However, in the case where the Ca content is more than 0.0020%, the deoxidizing effect becomes saturated, and there may be a decrease in surface quality due to scab flaws occurring as a result of Ca forming inclusions. Therefore, in the case where Ca is added, the Ca content is set to be 0.0020% or less.

[Manufacturing method]

There is no particular limitation on what method is used for manufacturing the ferritic stainless steel sheet for use as a urea SCR casing according to the present invention as long as the chemical composition of molten steel is controlled as described above at the molten steel stage, and a method which is generally used for manufacturing a ferritic stainless steel sheet may be used.
Preferable conditions for the manufacturing method described above will be described hereafter.
In a steel-making process in which molten steel is prepared, it is preferable to manufacture steel containing the essential constituent chemical elements described above and the constituent chemical elements which are added as needed by performing secondary refining on molten steel, which has been prepared by using a converter, an electric furnace, or the like, by using, for example, a VOD method. Although the prepared molten steel may be made into a steel material (slab) by using a known method, it is preferable that a continuous casting method be used from the viewpoint of productivity and product quality. Subsequently, the steel material is heated to a temperature of 1000°C to 1250°C and then hot-rolled into a hot-rolled steel sheet having a desired thickness. It is needless to say that the steel material may be formed into shapes other than a sheet shape by performing hot working. The hot-rolled steel sheet obtained as described above may be subjected to descaling by performing, for example, pickling after continuous annealing has been performed at a temperature of 850°C to 1100°C. In addition, although there is no particular limitation on cooling rate after annealing has been performed, it is preferable that the cooling time be as short as possible. Here, scale may be removed as needed by performing shot blasting before pickling is performed.

Moreover, the hot-rolled and annealed steel sheet or the hot-rolled steel sheet described above may be made into a cold-rolled product by performing processes such as a cold rolling process. In this case, although cold rolling may be performed only once, cold rolling may be performed twice or more with interposing process annealing between cold rolling from the viewpoint of productivity and desired product qualities. It is preferable that the total rolling reduction of the cold rolling process, in which cold rolling is performed once, twice, or more, be 60% or more, or more preferably 70% or more. It is preferable that the cold-rolled steel sheet be made into a cold-rolled product by then performing continuous annealing (finish annealing) at a temperature of 850°C to 1150°C, or more preferably 900°C to 1100°C, and pickling. Also, in this case, although there is no particular limitation on a cooling rate after annealing has been performed, it is preferable that the cooling rate be as large as possible. Moreover, in the case of some purposes of use, for example, skin pass rolling may be performed after finish annealing has been performed in order to control the shape, surface roughness, and material quality of a steel sheet.

EXAMPLE 1

Hereafter, the present invention will be described on the basis of examples. As examples, cold-rolled steel sheets used as samples were obtained by using the following methods.

By preparing steel ingots having a weight of 50 kg and the chemical compositions given in Table 1 by using a vacuum melting furnace, by heating the steel ingots to a temperature of 1200°C, by then performing hot rolling using a reverse rolling mill in order to obtain hot-rolled steel sheets having a thickness of 3 mm, by annealing the hot-rolled steel sheets at a temperature of 930°C to 1100°C, and by performing descaling through pickling the annealed steel sheets, hot-rolled and pickled steel sheets were obtained. Subsequently, by performing cold rolling using a reverse rolling mill on the hot-rolled and pickled steel sheets in order to obtain a thickness of 1.0 mm, by performing finish annealing at a temperature of 880°C to 970°C, and by dipping the annealed steel sheets in a mixed acid (containing 10 mass% of nitric acid and 3 mass% of hydrofluoric acid) having a temperature of 60°C in order to remove scale, cold-rolled steel sheets were obtained.

In order to investigate corrosion resistance in a urea SCR environment, by performing a test in accordance with JIS Z 0573 (Method of 65 percent nitric acid test for stainless steels) on samples, that is, the cold-rolled steel sheets described above, corrosion rate ($g/m^2/h$) over 48 hours was derived. A case where the corrosion rate was 0.35 $g/m^2/h$ or less was judged as a satisfactory case. The results are given in Table 1.

[Table 1]

| No. | Chemical Composition (Unit: mass%) | | | | | | | | | | | | | | | | Ti+Nb×48/93 -8×(C+N) | Urea SCR Environment Corrosion Test Result | |
|---|---|---|---|---|---|---|---|---|---|---|---|---|---|---|---|---|---|---|---|
| | C | Si | Mn | P | S | Al | Cr | Ni | N | Ti | Nb | Mo | Cu | V | Zr | Ca | | | |
| 1 | 0.0095 | 0.09 | 0.45 | 0.038 | 0.002 | 0.033 | 23.8 | 0.21 | 0.0070 | 0.35 | - | - | 0.53 | - | - | - | 0.22 | Satisfactory | Example |
| 2 | 0.0015 | 0.35 | 0.10 | 0.023 | 0.001 | 0.080 | 20.5 | 0.05 | 0.0168 | 0.35 | - | - | 0.50 | - | - | - | 0.20 | Satisfactory | Example |
| 3 | 0.0155 | 0.05 | 0.38 | 0.038 | 0.003 | 0.020 | 21.5 | 0.40 | 0.0051 | 0.29 | 0.06 | - | 0.43 | - | - | 0.0002 | 0.16 | Satisfactory | Example |
| 4 | 0.0020 | 0.45 | 0.12 | 0.018 | 0.003 | 0.045 | 21.0 | 0.10 | 0.0144 | 0.25 | - | - | 0.40 | 0.05 | - | - | 0.12 | Satisfactory | Example |
| 5 | 0.0071 | 0.11 | 0.33 | 0.030 | 0.003 | 0.028 | 21.2 | 0.21 | 0.0111 | - | 0.40 | - | 0.48 | 0.15 | - | 0.0008 | 0.06 | Satisfactory | Example |
| 6 | 0.0089 | 0.13 | 0.16 | 0.029 | 0.001 | 0.038 | 20.6 | 0.25 | 0.0070 | 0.30 | - | 0.25 | 0.41 | - | - | 0.0011 | 0.17 | Satisfactory | Example |
| 7 | 0.0092 | 0.15 | 0.15 | 0.031 | 0.002 | 0.030 | 20.8 | 0.23 | 0.0091 | 0.33 | - | 0.15 | 0.44 | 0.08 | - | - | 0.18 | Satisfactory | Example |
| 8 | 0.0113 | 0.09 | 0.12 | 0.028 | 0.003 | 0.033 | 21.4 | 0.21 | 0.0101 | 0.29 | - | - | 0.42 | 0.05 | 0.08 | 0.0012 | 0.12 | Satisfactory | Example |
| 9 | 0.0080 | 0.11 | 0.16 | 0.029 | 0.002 | 0.030 | 20.8 | 0.22 | 0.0098 | 0.31 | 0.01 | 0.08 | 0.44 | 0.03 | - | 0.0011 | 0.17 | Satisfactory | Example |
| 10 | 0.0110 | 0.12 | 0.15 | 0.019 | 0.002 | 0.031 | 20.7 | 0.19 | 0.0115 | 0.26 | 0.22 | - | 0.42 | 0.03 | - | 0.0009 | 0.19 | Satisfactory | Example |
| 11 | 0.0189 | 0.05 | 0.48 | 0.021 | 0.008 | 0.021 | 23.5 | 0.17 | 0.0111 | 0.39 | - | - | 0.70 | 0.15 | - | - | 0.15 | Satisfactory | Example |
| 12 | 0.0101 | 0.47 | 0.10 | 0.040 | 0.001 | 0.150 | 20.5 | 0.45 | 0.0191 | 0.35 | - | - | 0.78 | 0.08 | - | 0.0002 | 0.12 | Satisfactory | Example |
| 13 | 0.0083 | 0.12 | 0.11 | 0.028 | 0.002 | 0.033 | 20.6 | 0.21 | 0.0099 | 0.32 | - | - | 0.36 | 0.05 | - | 0.0009 | 0.17 | Unsatisfactory | Comparative Example |
| 14 | 0.0095 | 0.15 | 0.15 | 0.025 | 0.001 | 0.035 | 19.3 | 0.15 | 0.0093 | 0.29 | 0.10 | 0.12 | 0.44 | 0.08 | - | - | 0.19 | Unsatisfactory | Comparative Example |
| 15 | 0.0091 | 0.14 | 0.19 | 0.031 | 0.002 | 0.031 | 20.7 | 0.23 | 0.0095 | 0.12 | - | - | 0.41 | 0.03 | - | 0.0011 | -0.03 | Unsatisfactory | Comparative Example |
| 16 | 0.0113 | 0.11 | 0.18 | 0.028 | 0.003 | 0.028 | 20.6 | 0.16 | 0.0103 | - | 0.25 | - | 0.40 | 0.05 | - | - | -0.04 | Unsatisfactory | Comparative Example |

All the examples of the present invention were satisfactory in the urea SCR corrosion test, which means these examples had excellent corrosion resistance. On the other hand, No. 13, whose Cu content was less than the range according to the present invention, No. 14, whose Cr content was less than the range according to the present invention, and No. 15 and No. 16, whose Ti content and Nb content did not satisfy the relationship expressed by relational expression (1) according to the present invention, that is, "Ti + Nb × 48/93 ≥ 8 × (C + N)", were unsatisfactory in the urea SCR corrosion test. As described above, it is clarified that the steels according to the present invention are excellent in terms of corrosion resistance in a urea SCR environment.

Industrial Applicability

As described above, since the steel sheet used according to the present invention is excellent in terms of corrosion resistance in a urea SCR environment, the steel sheet can preferably be used as a material for a casing supporting a urea SCR catalyst carrier.

## Claims

1. Use of a ferritic stainless steel sheet for a urea SCR casing, the steel sheet having a chemical composition consisting of, by mass%,
C: 0.020% or less,
Si: 0.01% or more and 0.50% or less,
Mn: 0.01% or more and 0.50% or less,
P: 0.040% or less,
S: 0.010% or less,
Al: 0.01% or more and 0.20% or less,
Cr: 20.5% or more and 24.0% or less,
Cu: 0.40% or more and 0.80% or less,
Ni: 0.05% or more and 0.6% or less,
N: 0.020% or less,
one or both selected from among Ti: 0.01% or more and 0.40% or less and Nb: 0.01% or more and 0.55% or less,
optionally Mo: 0.01% or more and 0.25% or less, and optionally one, two, or all of
V:0.01% or more and 0.20% or less,
Zr: 0.01% or more and 0.20% or less, and
Ca: 0.0002% or more and 0.0020% or less, and
the balance being Fe and inevitable impurities,
wherein the relationship

$$\text{Ti} + \text{Nb} \times 48/93 \geq 8 \times (\text{C} + \text{N}) \quad \cdots \quad (1)$$

(in relational expression (1), Ti, Nb, C, and N denote the contents (mass%) of the corresponding chemical elements) is satisfied.

## Patentansprüche

1. Verwendung eines ferritischen Edelstahlblechs für ein Harnstoff-SCR-Gehäuse, wobei das Stahlblech eine chemische Zusammensetzung aufweist, die, in Massen%, aus C: 0,020% oder weniger,
Si: 0,01% oder mehr und 0,50% oder weniger,
Mn: 0,01% oder mehr und 0,50% oder weniger,
P: 0,040% oder weniger,
S: 0,010% oder weniger,
Al: 0,01% oder mehr und 0,20% oder weniger,
Cr: 20,5% oder mehr und 24,0% oder weniger,
Cu: 0,40% oder mehr und 0,80% oder weniger,
Ni: 0,05% oder mehr und 0,6% oder weniger,
N: 0,020% oder weniger,
einem oder beiden ausgewählt aus Ti: 0,01% oder mehr und 0,40% oder weniger und Nb: 0,01% oder mehr und 0,55% oder weniger, optional Mo: 0,01% oder mehr und 0,25% oder weniger, und optional einem, zweien oder allen aus
V:0,01% oder mehr und 0,20% oder weniger,
Zr: 0,01% oder mehr und 0,20% oder weniger, und
Ca: 0,0002% oder mehr und 0,0020% oder weniger, und
als Rest aus Fe und unvermeidbaren Verunreinigungen besteht, wobei die Beziehung

$$\mathrm{Ti\ +\ Nb\ x\ 48/93\ \geq\ 8\ x\ (C\ +\ N)\quad \cdots\ (1)}$$

(im Vergleichsausdruck (1) bezeichnen Ti, Nb, C und N die Gehalte (Massen%) der korrespondierenden chemischen Elemente) erfüllt wird.

## Revendications

1. Utilisation d'une tôle d'acier inoxydable ferritique pour un boîtier SCR par urée, la tôle d'acier ayant une composition chimique consistant en, en % en masse,
   C : 0,020 % ou moins,
   Si : 0,01 % ou plus et 0,50 % ou moins,
   Mn : 0,01 % ou plus et 0,50 % ou moins,
   P : 0,040 % ou moins,
   S : 0,010 % ou moins,
   Al : 0,01 % ou plus et 0,20 % ou moins,
   Cr : 20,5 % ou plus et 24,0 % ou moins,
   Cu : 0,40 % ou plus et 0,80 % ou moins,
   Ni : 0,05 % ou plus et 0,6 % ou moins,
   N : 0,020 % ou moins
   un ou les deux sélectionnés parmi Ti : 0,01 % ou plus et 0,40 % ou moins et Nb : 0,01 % ou plus et 0,55 % ou moins,
   facultativement Mo : 0,01 % ou plus et 0,25 % ou moins, et facultativement un, deux, ou tous parmi
   V : 0,01 % ou plus et 0,20 % ou moins,
   Zr : 0,01 % ou plus et 0,20 % ou moins, et
   Ca : 0,0002 % ou plus et 0,0020 % ou moins, et
   le reste étant Fe et des impuretés inévitables,
   dans laquelle la relation

$$Ti + Nb \times 48/93 \geq 8 \times (C + N) \qquad (1)$$

   (dans l'expression relationnelle (1), Ti, Nb, C, et N indiquent les teneurs (% en masse) des éléments chimiques correspondants) est satisfaite.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012112025 A

- US 2009056838 A1

**Non-patent literature cited in the description**

- Corrosion of stainless steels in simulated diesel exhaust environment with urea. **NOCKERT J et al.** MATERIALS AND CORROSION. WILEY, 01 May 2012, vol. 63, 388-395